Europäisches Patentamt

European Patent Office

Office européen des brevets

(11) Veröffentlichungsnummer: **0 485 740 A1**

(12) **EUROPÄISCHE PATENTANMELDUNG**

(21) Anmeldenummer: **91117276.5**

(22) Anmeldetag: **10.10.91**

(51) Int. Cl.⁵: **G11B 27/28**, G11B 27/10,
G11B 27/00, G11B 27/34

(30) Priorität: **12.11.90 DE 4035888**

(43) Veröffentlichungstag der Anmeldung:
**20.05.92 Patentblatt 92/21**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Kress, Holger, Grundig E.M.V., Max**
**Grundig**
**holländ. Stiftung & Co. KG, Kurgartenstrasse**
**37**
**W-8510 Fuerth(DE)**

(54) **Einrichtung zum Erfassen von auf Magnetband aufgebrachten Index-Informationen zum schnellen Wiederauffinden von Videosignalabschnitten.**

(57) Videoaufzeichnungsgeräte mit geräteseitigem Speicher zur Archivierung von Index-Informationen über Magnetbandkassetten haben den Nachteil, daß nur die Index-Informationen solcher Magnetbandkassetten, die auch mit demselben Videoaufzeichnungsgerät aufgezeichnet worden sind, im Speicher erfaßt werden können.

Bei der vorgeschlagenen Einrichtung können, durch einen gesonderten Archivierungsdurchlauf, auch Magnetbandkassetten im geräteseitigen Speicher erfaßt werden, die nicht mit dem Videoaufzeichnungsgerät aufgezeichnet wurden, welches über den Speicher zur Index-Archivierung verfügt.

Die Erfindung betrifft eine Einrichtung mit den im Oberbegriff des Anspruchs 1 angegebenen Merkmalen.

Zum schnellen Auffinden von Aufzeichnungsabschnitten auf einem Aufzeichnungsträger sind der Fachwelt bereits verschiedene Möglichkeiten bekannt. Die meisten dieser Möglichkeiten beruhen darauf, bei der Aufzeichnung an bestimmten Stellen des Aufzeichnungsträgers bestimmte Kennungen aufzubringen, wie z. B. Zeitmarken. Die Zählung dieser Zeitmarken liefert eine Ortsinformation, die zum schnellen Auffinden eines bestimmten Aufzeichnungsabschnittes verwendet werden kann.

Aus der EP-OS 257 534 der Anmelderin ist eine Einrichtung zum Aufzeichnen und schnellen Wiederauffinden von Videosignalabschnitten auf einem Magnetband bereits bekannt. Es werden die Index-Informationen über die örtliche Lage der Videosignalabschnitte während der Aufzeichnung auf das Magnetband in einen geräteseitigen Speicher eingetragen, der für eine Vielzahl von Magnetbandkassetten ausgelegt ist. Mit Hilfe der gespeicherten Index-Informationen über die örtliche Lage der Videosignalabschnitte läßt sich bei allen erfaßten Magnetbandkassetten ein beliebiger Videosignalabschnitt schnell auffinden.

Probleme treten aber für den Fall auf, daß Magnetbandkassetten wiedergegeben werden sollen, die nicht mittels des mit der bekannten Einrichtung versehenen Gerätes aufgezeichnet worden sind, da sich die Informationen über die örtliche Lage der Videosignalabschnitte dieser Magnetbandkassetten nicht im zur bekannten Einrichtung gehörenden geräteseitigen Speicher befinden.

Der Erfindung liegt daher die Aufgabe zugrunde, eine Einrichtung der im Oberbegriff des Anspruchs 1 angegebenen Art derart weiterzubilden, daß ein schnelles Auffinden bevorzugter Videosignalabschnitte auch für Magnetbandkassetten möglich ist, die nicht mit dem mit der vorbekannten Einrichtung versehenen Videoaufzeichnungsgerät aufgezeichnet wurden.

Diese Aufgabe wird durch die im kennzeichnenden Teil des Anspruchs 1 angegebenen Merkmale gelöst. Vorteilhafte Weiterbildungen ergeben sich aus den Unteransprüchen.

Der Vorteil der Erfindung liegt insbesondere darin, daß Magnetbandkassetten, welche auf anderen Videoaufzeichnungsgeräten aufgezeichnet wurden, so daß die Erfassung der Informationen über die örtliche Lage der Videosignalabschnitte im geräteseitigen Speicher nicht möglich war, zum schnellen Wiederauffinden von Videosignalabschnitten tauglich sind. Weitere vorteilhafte Eigenschaften der Einrichtung ergeben sich aus der folgenden Erläuterung eines Ausführungsbeispiels.

Eine bereits mit Aufzeichnungen versehene Magnetbandkassette soll erfaßt, und die auf ihr vorhandenen Informationen über die örtliche Lage der Videosignalabschnitte sollen in den geräteseitigen Speicher übernommen werden.

Dazu wird nach dem Einlegen der mit einer Kennzahl versehenen Magnetbandkassette in das Videoaufzeichnungsgerät mit der Bedientastatur die Kennzahl eingegeben und somit ein bestimmter Speicherbereich des Speichers des Videoaufzeichnungsgerätes der Magnetbandkassette zugeordnet. Im schnellen Umspulbetrieb wird das gesamte Magnetband umgespult und alle Index-Informationen über die örtliche Lage der Videosignalabschnitte werden im zugeordneten Speicherbereich abgespeichert.

Durch die Ermittlung der örtlichen Lage der Videosignalabschnitte im schnellen Umspulbetrieb wird eine höhere Genauigkeit beim späteren schnellen Wiederauffinden erreicht, da das schnelle Auffinden von Videosignalabschnitten ebenfalls im schnellen Umspulbetrieb erfolgt.

Nachdem die Ermittlung und Abspeicherung der Index-Informationen über die örtliche Lage der Videosignalabschnitte abgeschlossen ist, wird das für die eingelegte Magnetbandkassette ermittelte Inhaltsverzeichnis in Form von Start- und gegebenenfalls auch Endzeiten der einzelnen Videosignalabschnitte und der zugeordneten Kennzahl der Magnetbandkassette auf einer Anzeige wiedergegeben und kann durch Texteingabe mit der Bedientastatur um Informationen wie Titel, Aufnahmedatum usw. erweitert werden. Da die VPS-Zusatzinformation (VPS = Video Programm System) auch codierte Daten über die Programmquelle enthält, können auch diese Daten in den Index-Informationen enthalten sein und auf einer Anzeige dargestellt werden.

**Patentansprüche**

1. Einrichtung zum Erfassen von auf Magnetband aufgebrachten Index-Informationen zum schnellen Wiederauffinden von Videosignalabschnitten, mit
   - einer Bedientastatur,
   - einem Bandlängenzähler,
   - einem Vergleicher,
   - einem Mikroprozessor, und
   - einem Speicher zur Abspeicherung von Index-Informationen über die örtliche Lage der Videosignalabschnitte, die auf dem Magnetband aufgezeichnet sind, für eine Vielzahl von Magnetbandkassetten,

   wobei zum Wiederauffinden eines gewünschten Videosignalabschnittes eine den gewünschten Videosignalabschnitt kennzeichnende Index-Sollinformation mittels Bedientastatur eingegeben und während des Bandtransports im Vergleicher mit einer dem momentanen Bandstand entsprechenden Istinformation verglichen wird, **dadurch gekennzeichnet,** daß die Einrichtung

- das bereits bespielte und mit Index-Informationen über die örtliche Lage der Videosignalabschnitte versehene Magnetband zum nachträglichen Ermitteln der Index-Informationen über die örtliche Lage der Videosignalabschnitte im schnellen Umspulbetrieb bewegt,
- ein vollständiges Umspulen der Magnetbandkassette einleitet und alle Index-Informationen über die örtliche Lage der Videosignalabschnitte ermittelt.
- nach der Ermittlung der Index-Informationen über die örtliche Lage der Videosignalabschnitte diese automatisch in den geräteseitigen Speicher weiterleitet,
- der jeweils eingelegten Magnetbandkassete einen bestimmten Speicherbereich des geräteseitigen Speichers zuordnet.

2. Einrichtung nach Anspruch 1,
**dadurch gekennzeichnet,**
daß die Index-Informationen über die örtliche Lage der Videosignalabschnitte die Aufnahmestartzeitpunkte und der Bandstand sind.

3. Einrichtung nach Anspruch 1,
**dadurch gekennzeichnet,**
daß die Index-Informationen über die örtliche Lage der Videosignalabschnitte die Aufnahmestart- und Aufnahmeendzeitpunkte und der Bandstand sind.

4. Einrichtung nach Anspruch 1,
**dadurch gekennzeichnet,**
daß die Index-Informationen über die örtliche Lage der Videosignalabschnitte ein die Quelle und oder den Inhalt des Videosignalabschnittes beschreibender Code und der Bandstand sind.

5. Einrichtung nach Anspruch 1,
**dadurch gekennzeichnet,**
daß die Zuordnung des geräteseitigen Speicherbereichs mittels der Bedientastatur erfolgt.

6. Einrichtung nach einem der vorhergehenden Ansprüche,
**dadurch gekennzeichnet,**
daß der geräteseitige Speicherinhalt in Form eines Inhaltsverzeichnisses auf einer Anzeige darstellbar ist.

7. Einrichtung nach Anspruch 6,
**dadurch gekennzeichnet,**
daß das Inhaltsverzeichnis mittels der Bedientastatur mit Textinformationen wie Titel, Aufnahmedatum usw. erweitert werden kann.

8. Einrichtung nach Anspruch 6,
**dadurch gekennzeichnet,**
daß die Auswahl einer zu ergänzenden oder wiederzugebenden Szene mittels optischer Markierung im dargestellten Inhaltsverzeichnis erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-4 870 515 (STOKES)<br>* Spalte 1, Zeile 65 - Spalte 2, Zeile 61 *<br>* Spalte 3, Zeile 4 - Zeile 14 *<br>* Spalte 3, Zeile 21 - Zeile 28 *<br>* Spalte 3, Zeile 51 - Zeile 56 *<br>* Spalte 6, Zeile 1 - Zeile 18 *<br>* Spalte 11, Zeile 42 - Spalte 12, Zeile 16 *<br>--- | 1-8 | G11B27/28<br>G11B27/10<br>G11B27/00<br>G11B27/34 |
| Y | US-A-4 956 725 (KOZUKI ET AL.)<br>* Spalte 8, Zeile 4 - Zeile 30 *<br>--- | 1 | |
| Y,D | EP-A-0 257 534 (GRUNDIG E.M.V.)<br>* das ganze Dokument * | 2-8 | |
| A | * das ganze Dokument *<br>--- | 1 | |
| A | PATENT ABSTRACTS OF JAPAN<br>vol. 9, no. 259 (P-397)(1982) 17. Oktober 1985<br>& JP-A-60 107 788 ( TOSHIBA K.K. ) 13. Juni 1985<br>* Zusammenfassung *<br>--- | 1 | |
| A | US-A-4 224 644 (LEWIS ET AL.)<br>* Spalte 3, Zeile 17 - Zeile 51 *<br>* Spalte 5, Zeile 56 - Spalte 6, Zeile 21 *<br>* Spalte 7, Zeile 3 - Zeile 38 *<br>* Spalte 8, Zeile 67 - Spalte 9, Zeile 52 *<br>* Spalte 10, Zeile 9 - Spalte 12, Zeile 65 *<br>--- | 1-4 | **RECHERCHIERTE SACHGEBIETE (Int. Cl.5 )**<br><br>G11B |
| A | DE-A-3 735 539 (VICTOR COMPANY OF JAPAN,LTD.)<br>* Spalte 6, Zeile 58 - Spalte 9, Zeile 40 *<br>* Spalte 10, Zeile 25 - Zeile 28 *<br>* Spalte 10, Zeile 46 - Spalte 11, Zeile 35;<br>Abbildungen 1,2 *<br>--- | 1,4,7 | |
| A | EP-A-0 248 945 (GENERAL SERVICE ELECTRONICS GMBH.)<br>* Spalte 1, Zeile 1 - Zeile 8 *<br>* Spalte 4, Zeile 41 - Zeile 48 *<br>* Spalte 5, Zeile 16 - Zeile 20 *<br>* Spalte 5, Zeile 47 - Zeile 55 *<br>* Spalte 8, Zeile 32 - Spalte 9, Zeile 4 * | 1-4,7 | |

Der vorliegende Recherchenbericht wurde für alle Patentansprüche erstellt

| Recherchenort | Abschlußdatum der Recherche | Prüfer |
|---|---|---|
| DEN HAAG | 26 NOVEMBER 1991 | F. J. DAALMANS |

Europäisches
Patentamt

EUROPÄISCHER RECHERCHENBERICHT

Nummer der Anmeldung

EP    91 11 7276
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| | --- | | |
| A | FR-A-2 482 757 (JACQUES)<br>* Seite 1, Zeile 23 - Zeile 37 *<br>* Seite 3, Zeile 13 - Seite 8, Zeile 7 * | 1-4 | |
| | --- | | |
| A | EP-A-0 363 653 (GRUNDIG E.M.V.)<br>* das ganze Dokument * | 1-7 | |
| | ----- | | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 26 NOVEMBER 1991 | F. J. DAALMANS |